# EUROPÄISCHE PATENTSCHRIFT

(11) **EP 3 022 012 B1**
(45) Veröffentlichungstag und Bekanntmachung des Hinweises auf die Patenterteilung: **15.11.2017**
(21) Anmeldenummer: 14739099.1
(22) Anmeldetag: 03.07.2014
(51) Int. Cl.: B23Q 3/06, B23D 55/04, B25B 1/18, B25B 1/24, F15B 15/28

(54) **WERKSTÜCK-SPANNVORRICHTUNG, WERKZEUGMASCHINE UND VERFAHREN ZUM EINSPANNEN EINES WERKSTÜCKS**
WORKPIECE CLAMPING DEVICE, MACHINE TOOL, AND METHOD FOR CLAMPING A WORKPIECE
DISPOSITIF DE SERRAGE D'UNE PIÈCE, MACHINE-OUTIL ET PROCÉDÉ POUR LE SERRAGE D'UNE PIÈCE

(30) Priorität: 18.07.2013 DE 102013107661
(43) Veröffentlichungstag der Anmeldung: 25.05.2016
(73) Patentinhaber: Behringer GmbH, 74912 Kirchardt (DE)
(72) Erfinder: BEHRINGER, Christian, 74912 Kirchardt (DE)
(74) Vertreter: Hoeger, Stellrecht & Partner Patentanwälte mbB
(86) Internationale Anmeldenummer: PCT/EP2014/064229
(87) Internationale Veröffentlichungsnummer: WO 2015/007537

(56) Entgegenhaltungen:
- EP-A2- 1 247 997
- WO-A1-00/13855
- DE-A1- 2 117 550

## Beschreibung

Die Erfindung betrifft eine Werkstück-Spannvorrichtung für eine Werkzeugmaschine.
Die Erfindung betrifft ferner eine Werkzeugmaschine, umfassend ein Maschinengestell, mindestens einen Werkstückhalter und mindestens einen Werkzeughalter.
Weiterhin betrifft die Erfindung ein Verfahren zum Einspannen eines Werkstücks an einer Werkstück-Spannvorrichtung, bei dem das Werkstück zwischen einer verschieblichen ersten Spannbacke und einer zweiten Spannbacke eingespannt wird. Aus der DE-2117550 ist eine Werkstück-Spannvorrichtung bekannt, umfassend eine Basis, eine erste Spannbacke, welche relativ zu der Basis verschieblich ist, eine zweite Spannbacke, wobei ein Werkstück zwischen der ersten Spannbacke und der zweiten Spannbacke einspannbar ist, einen Antrieb, ein Betätigungselement, welches relativ zu der Basis verschieblich ist und welches an die erste Spannbacke gekoppelt ist, wobei eine Verschiebungsbewegung des Betätigungselements durch den Antrieb bewirkt ist und das Betätigungselement eine Verschiebung der ersten Spannbacke bewirkt, einen Geber, welcher an dem Betätigungselement angeordnet ist und mit dem Betätigungselement verschieblich ist, und einen Sensor, durch welchen eine Position des Gebers detektierbar ist. Aus der EP 0 803 331 A1 ist eine Kniehebelspannvorrichtung für den Karosseriebau bekannt.
Aus der EP 1 306 563 A1 ist ein Stoppelement zur Montage auf einer Stange für die Bildung eines verstellbaren Anschlags entlang der Stange bekannt, wobei das Stoppelement aus einem ringförmigen Metallelement mit einer glatten oder ein Gewinde aufweisenden Innenfläche besteht.
Aus der US 7,263,781 B2 ist ein Positionsmessgerät für einen Fluidzylinder bekannt.
Aus der EP 0 855 800 A1 ist eine induktive Endstellungsabfrageeinrichtung bekannt.
Der Erfindung liegt die Aufgabe zugrunde, eine Werkstück-Spannvorrichtung der eingangs genannten Art bereitzustellen, bei welcher auf konstruktiv einfache Weise ein Verfahrweg begrenzbar ist.

Diese Aufgabe wird bei der eingangs genannten Werkstück-Spannvorrichtung erfindungsgemäß dadurch gelöst, dass vorgesehen sind:

Eine Basis, eine erste Spannbacke, welche relativ zu der Basis verschieblich ist, eine zweite Spannbacke, wobei ein Werkstück zwischen der ersten Spannbacke und der zweiten Spannbacke einspannbar ist, ein Antrieb, ein Betätigungselement, welches relativ zu der Basis verschieblich ist und welches an die erste Spannbacke gekoppelt ist, wobei eine Verschiebungsbewegung des Betätigungselements durch den Antrieb bewirkt ist und das Betätigungselement eine Verschiebung der ersten Spannbacke bewirkt, ein Geber, welcher an dem Betätigungselement angeordnet ist und mit dem Betätigungselement verschieblich ist und relativ zu dem Betätigungselement verschieblich ist, ein erster Anschlag und ein beabstandeter zweiter Anschlag für den Geber, zwischen welchen der Geber mit dem Betätigungselement verschieblich ist, wobei bei Anliegen des Gebers an dem ersten Anschlag oder an dem zweiten Anschlag der Geber relativ zu dem Betätigungselement verschieblich ist, und einen Sensor, durch welchen eine oder mehrere Positionen des Gebers detektierbar sind.

Die Position des Gebers ist ein Indikator für den Verfahrweg. Eine oder mehrere Positionen und insbesondere eine bestimmte Position des Gebers relativ zu dem ersten Anschlag lässt sich über den Sensor auf einfache Weise reproduzierbar detektieren.

Es lässt sich auf einfache Weise ein Sensorsignal und insbesondere Schaltsignal generieren, durch welches der Verfahrweg begrenzbar ist.

Eine Begrenzung des Verfahrwegs als Differenz zwischen der Öffnungsweite zwischen der ersten Spannbacke und der zweiten Spannbacke und einer Werkstückbreite ist wünschenswert, um eine Quetschgefahr für einen Bediener, der ein neu zu bearbeitendes Werkstück einführt, zu minimieren.

Beispielsweise sollte nach der DIN-Norm 13898 der Verfahrweg nicht größer als 6 mm sein.

Bei der erfindungsgemäßen Lösung lässt sich einerseits der Geber mit dem Betätigungselement zwischen zwei ausgezeichneten Positionen, nämlich zwischen dem ersten Anschlag und dem zweiten Anschlag mittels des Betätigungselements bewegen. Er lässt sich bei Anliegen an dem ersten Anschlag beziehungsweise dem zweiten Anschlag translationsfest halten, da grundsätzlich eine relative Verschieblichkeit des Betätigungselements zu dem Geber möglich ist. Es lässt sich dadurch wiederum ein sicheres Sensorsignal und insbesondere Schaltsignal bei Erreichen des ersten Anschlags generieren, um insbesondere eine weitere Wegbewegung der ersten Spannbacke von der zweiten Spannbacke zu stoppen.

Es wird dadurch auf einfache und sichere Weise eine reproduzierbare, genaue Verfahrwegbegrenzung erreicht.

Diese Verfahrwegbegrenzung lässt sich mit konstruktiv einfachem Aufbau erreichen, wobei insbesondere ein Einspannungsvorgang des Werkstücks zwischen der ersten Spannbacke und der zweiten Spannbacke minimal beeinflusst wird.

Die Werkstück-Spannvorrichtung kann grundsätzlich beliebig im Raum ausgerichtet sein. Sie kann beispielsweise (bezogen auf die Schwerkraftrichtung) horizontal ausgerichtet sein oder vertikal ausgerichtet sein oder auch zwischen einer vertikalen oder horizontalen Stellung ausgerichtet sein.

Das Betätigungselement ist an die erste Spannbacke gekoppelt. Es ist grundsätzlich möglich, dass das Betätigungselement nicht an die zweite Spannbacke gekoppelt ist oder an die zweite Spannbacke gekoppelt ist. Im letzteren Falle ist das Betätigungselement beispielsweise als Links-Rechts-Spindel ausgebildet beziehungsweise umfasst eine solche. Eine derartige Werkstück-Spannvorrichtung ist vorteilhaft für die Einspannung von Rundmaterialien.

Günstig ist es, wenn der erste Anschlag und der zweite Anschlag translationsfest zu der Basis angeordnet sind (wobei grundsätzlich eine festgestellte Einstellbarkeit der Position zu der Basis möglich ist). Es werden dadurch gewissermaßen Referenzpunkte gesetzt, wobei insbesondere der erste Anschlag ein Referenzpunkt für die Begrenzung des Verfahrwegs ist. Durch den ersten Anschlag und den zweiten Anschlag bewegt sich der Geber reproduzierbar nur in dem Bereich zwischen dem ersten Anschlag und dem zweiten Anschlag. Es wird dadurch eine hohe Reproduzierbarkeit der Verfahrwegbegrenzung erreicht.

Günstigerweise ist eine Abstandsrichtung zwischen dem ersten Anschlag und dem zweiten Anschlag parallel zu einer Verschiebungsrichtung des Betätigungselements. Dadurch lässt sich eine Verfahrwegbegrenzung auf konstruktiv einfache Weise erreichen.

Bei einem Ausführungsbeispiel sind der erste Anschlag und der zweite Anschlag durch Innenseiten eines Gehäuses gebildet, in welchem ein Sensorkopf des Sensors angeordnet ist. Das Gehäuse kann dazu verwendet werden, den Sensorkopf zu schützen. Ferner kann dadurch der Geber geschützt werden. Das Gehäuse kann auch dazu verwendet werden, um eine Führung für das Betätigungselement relativ zu der Basis zu realisieren. Das Gehäuse kann geschlossen sein oder an einer oder mehreren Seiten offen sein.

Es ist dann günstig, wenn der Geber in dem Gehäuse positioniert ist. Dadurch lässt sich dieser geschützt unterbringen und es ist auf einfache Weise eine Bewegung zwischen dem ersten Anschlag und dem zweiten Anschlag realisierbar.

Günstig ist es, wenn der Geber auf dem Betätigungselement sitzt. Dadurch lässt sich auf einfache Weise eine Mitnahme des Gebers mit dem Betätigungselement für eine Beweglichkeit zwischen dem ersten Anschlag und dem zweiten Anschlage erreichen.

Es ist dann besonders vorteilhaft, wenn der Geber ein Ringelement aufweist oder durch ein Ringelement gebildet ist, wobei das Betätigungselement durch eine Ringöffnung durchgetaucht ist. Es lässt sich dadurch auf einfache Weise eine Fixierung des Gebers an dem Betätigungselement erreichen. Die Fixierung lässt sich auf konstruktiv einfache Weise so ausbilden, dass zwischen dem ersten Anschlag und dem zweiten Anschlag der Geber mit dem Betätigungselement verschieblich ist, das heißt, dass der Geber translationsfest zu dem Betätigungselement ist. Es lässt sich auch auf einfache Weise erreichen, dass bei Anliegen an dem ersten Anschlag beziehungsweise dem zweiten Anschlag der Geber translationsfest zu der Basis ist, das heißt grundsätzlich das Betätigungselement relativ zu dem Geber verschieblich ist.

Insbesondere ist es vorgesehen, dass der Geber kraftschlüssig an dem Betätigungselement sitzt. Es lässt sich dadurch auf konstruktiv einfache Weise erreichen, dass der Geber für eine Verschiebung zwischen dem ersten Anschlag und dem zweiten Anschlag durch das Betätigungselement mitgenommen wird und bei Anliegen an dem ersten Anschlag beziehungsweise dem zweiten Anschlag nicht mitgenommen wird, sondern translationsfest zu der Basis ist.

Eine kraftschlüssige Fixierung lässt sich auf einfache Weise erreichen, wenn der Geber ein elastisches Element aufweist, über welches der Geber an dem Betätigungselement sitzt. Das elastische Element ist ein Stellelement und insbesondere ein Stellring, welches für eine kraftschlüssige Fixierung sorgt. Über das elastische Element lässt sich durch Vergrößerung der Normalkraft eine erhöhte (Haft-)Reibungskraft für die kraftschlüssige Fixierung erreichen.

Bei einem fertigungstechnisch und konstruktiv einfachem Ausführungsbeispiel ist das elastische Element ein O-Ring.

Günstigerweise weist der Geber einen oder mehrere Bereiche auf, bezüglich welchen der Sensor sensitiv ist. Dadurch lässt sich eine definierte Position beziehungsweise lassen sich mehrere definierte Positionen des Gebers durch den Sensor detektieren.

Insbesondere ist der Sensor ein Näherungssensor oder Abstandssensor oder Kontaktschalter. Es lässt sich dadurch eine Position oder mehrere Positionen und insbesondere eine oder mehrere ausgezeichnete Positionen des Gebers relativ zu dem Sensor detektieren. Der Sensor kann beispielsweise eine oder mehrere bestimmte Positionen des Gebers berührungslos ermitteln oder es kann ein entsprechendes Signal und insbesondere Schaltsignal erzeugt werden, wenn der Geber den Sensor, welcher dann insbesondere als Kontaktschalter beziehungsweise Mikroschalter ausgebildet ist, mechanisch kontaktiert.

Insbesondere ist der Sensor ein berührungsloser Sensor. Dadurch wird beispielsweise durch die erfindungsgemäße Verfahrwegbegrenzung eine Werkstückeinspannung minimal beeinflusst.

Bei einem Ausführungsbeispiel ist der Sensor ein induktiver Sensor. Dadurch kann beispielsweise der Geber auf einfache Weise als Metallelement ausgebildet werden, wobei insbesondere eine oder mehrere ausgezeichnete Positionen des Gebers relativ zu dem Sensor auf einfache und berührungslose Weise feststellbar sind.

Insbesondere generiert der Sensor ein Schaltsignal, wenn der Geber den ersten Anschlag erreicht, wobei der erste Anschlag weiter entfernt von der ersten Spannbacke ist als der zweite Anschlag. Das Schaltsignal kann dabei dazu benutzt werden, um eine Weiterbewegung der ersten Spannbacke von der zweiten Spannbacke weg zu stoppen. Dadurch lässt sich eine effektive Verfahrwegbegrenzung erreichen.

Günstig ist es, wenn eine Steuerungseinrichtung vorgesehen ist, welche signalwirksam an den Sensor gekoppelt ist und welche den Antrieb ansteuert. Dadurch lässt sich über ein Sensorsignal eine Position des Betätigungselements einstellen und insbesondere lässt sich eine Wegbewegung der ersten Spannbacke von der zweiten Spannbacke stoppen, wenn der Sensor ein entsprechendes Signal bereitstellt, welches anzeigt, dass der Geber an dem ersten Anschlag anliegt.

Insbesondere stoppt die Steuerungseinrichtung eine Wegbewegung der ersten Spannbacke von der zweiten Spannbacke, wenn der Sensor ein Schaltsignal für das Erreichen des ersten Anschlags durch den Geber bereitstellt. Dadurch lässt sich auf einfache Weise eine effektive Verfahrwegbegrenzung erreichen, um insbesondere eine Quetschgefahr für einen Bediener zu minimieren.

Ganz besonders vorteilhaft ist es, wenn die Steuerungseinrichtung eine Verfahrweg-Begrenzungseinrichtung aufweist, welche eine Öffnungsweise zwischen der ersten Spannbacke und der zweiten Spannbacke begrenzt, wobei ein Verfahrweg die Öffnungsweite abzüglich einer Werkstückbreite ist. Es lässt sich dadurch die Quetschgefahr minimieren.

Insbesondere ist der Verfahrweg auf höchstens 6 mm begrenzt, um eine einschlägige DIN-Norm zu erfüllen.

Es kann vorgesehen sein, dass mindestens eine der vorliegenden Größen feststellbar einstellbar ist: (i) Position des ersten Anschlags; (ii) Position des zweiten Anschlags; (iii) Abstand zwischen dem ersten Anschlag und dem zweiten Anschlag. Es lässt sich dadurch die Werkstück-Spannvorrichtung an unterschiedliche Werkstückbreiten anpassen.

Ganz besonders vorteilhaft ist es, wenn der erste Anschlag weiter entfernt von der ersten Spannbacke ist als der zweite Anschlag, wobei, wenn die erste Spannbacke auf die zweite Spannbacke zubewegt ist, der Geber zunächst in Richtung des zweiten Anschlags mitgenommen mit dem Betätigungselement verschoben wird, bis er an dem zweiten Anschlag anliegt, und dann der Geber relativ zu dem zweiten Anschlag nicht weiter verschoben wird, und, wenn die erste Spannbacke von der zweiten Spannbacke weg bewegt ist, der Geber mitgenommen mit dem Betätigungselement in Richtung des ersten Anschlags verschoben wird, bis er an diesem anliegt und bei Weiterbewegung des Betätigungselements nicht weiter verschoben wird. Es wird dadurch eine Beweglichkeit des Gebers zwischen dem ersten Anschlag und dem zweiten Anschlag realisiert, wobei der entsprechende Bewegungsweg fest zu der Basis ist. Es lässt sich wiederum durch Überwachung mittels des Sensors, ob der Geber an dem ersten Anschlag anliegt, und dann entsprechende Bereitstellung eines Signals und insbesondere Schaltsignals eine Verfahrwegbegrenzung erreichen. Diese Verfahrwegbegrenzung lässt sich mit relativ geringem konstruktivem Aufwand realisieren und sie weist eine hohe Reproduzierbarkeit auf.

Der Antrieb ist beispielsweise ein hydraulischer, pneumatischer oder motorischer Antrieb.

Bei einem Ausführungsbeispiel ist der Antrieb ein hydraulischer pneumatischer Antrieb und das Betätigungselement ist Teil einer Kolbeneinheit und ist insbesondere eine Kolbenstange.

Ganz besonders vorteilhaft ist es, wenn durch den Antrieb eine Abstandsposition zwischen der ersten Spannbacke und der zweiten Spannbacke feststellbar ist. Der Antrieb bewirkt dann nicht nur eine Verschiebungsbewegung des Betätigungselements, sondern er legt eine bestimmte Position des Betätigungselements auch fest.

Erfindungsgemäß wird eine Werkzeugmaschine der eingangs genannten Art bereitgestellt, bei der der mindestens eine Werkstückhalter eine erfindungsgemäße Werkstück-Spannvorrichtung ist oder umfasst.

Insbesondere ist die Basis Teil des Maschinengestells oder ist fest an diesem angeordnet. Dadurch ergibt sich ein einfacher konstruktiver Aufbau.

Bei einem Ausführungsbeispiel ist die Werkzeugmaschine als Sägemaschine und insbesondere Bandsägemaschine ausgebildet, wobei ein Werkzeug ein Sägewerkzeug und insbesondere ein Sägeband ist. Die erfindungsgemäße Werkstück-Spannvorrichtung lässt sich auf effektive Weise bei einer Sägemaschine und insbesondere Bandsägemaschine einsetzen.

Der Erfindung liegt ferner die Aufgabe zugrunde, ein Verfahren der eingangs genannten Art bereitzustellen, bei dem eine effektive Verfahrwegbegrenzung erreicht ist.

Diese Aufgabe wird bei dem eingangs genannten Verfahren erfindungsgemäß dadurch gelöst, dass das Werkstück zwischen einer verschieblichen ersten Spannbacke und einer zweiten Spannbacke eingespannt wird, wobei die erste Spannbacke mittels eines Betätigungselements verschoben wird und an dem Betätigungselement ein Geber angeordnet ist, für den eine oder mehrere bestimmte Positionen durch einen Sensor erfasst werden, und bei dem zwischen einem ersten Anschlag und einem zweiten Anschlag der Geber durch das Betätigungselement mitgenommen wird und der Geber bei Anliegen an dem ersten Anschlag oder bei Anliegen an dem zweiten Anschlag unverschieblich bezüglich einer Basis ist und relativ zu dem Betätigungselement verschieblich ist.

Das erfindungsgemäße Verfahren weist die bereits im Zusammenhang mit der erfindungsgemäßen Werkstück-Spannvorrichtung erläuterten Vorteile auf.

Weitere vorteilhafte Ausgestaltungen des erfindungsgemäßen Verfahrens wurden bereits im Zusammenhang mit der erfindungsgemäßen Werkstück-Spannvorrichtung erläutert.

Insbesondere wird bei Erreichen des ersten Anschlags durch den Geber, wobei der erste Anschlag weiter entfernt von der ersten Spannbacke ist als der zweite Anschlag, durch den Sensor ein Schaltsignal erzeugt. Dieses Schaltsignal kann dazu verwendet werden, eine weitere Wegbewegung der ersten Spannbacke von der zweiten Spannbacke zu stoppen.

Vorteilhafterweise ist eine Steuerungseinrichtung vorgesehen, welche aufgrund des Schaltsignals des Sensors eine weitere Auseinanderbewegung der ersten Spannbacke von der zweiten Spannbacke weg stoppt, um einen Verfahrweg zu begrenzen.

Das erfindungsgemäße Verfahren lässt sich an der erfindungsgemäßen Werkstück-Spannvorrichtung durchführen.

Die erfindungsgemäße Werkstück-Spannvorrichtung lässt sich mit dem erfindungsgemäßen Verfahren betreiben.

Die nachfolgende Beschreibung bevorzugter Ausführungsformen dient im Zusammenhang mit den Zeichnungen der näheren Erläuterung der Erfindung. Es zeigen:
- Figur 1: eine schematische Darstellung einer Bandsägemaschine als Ausführungsbeispiel einer Werkzeugmaschine;

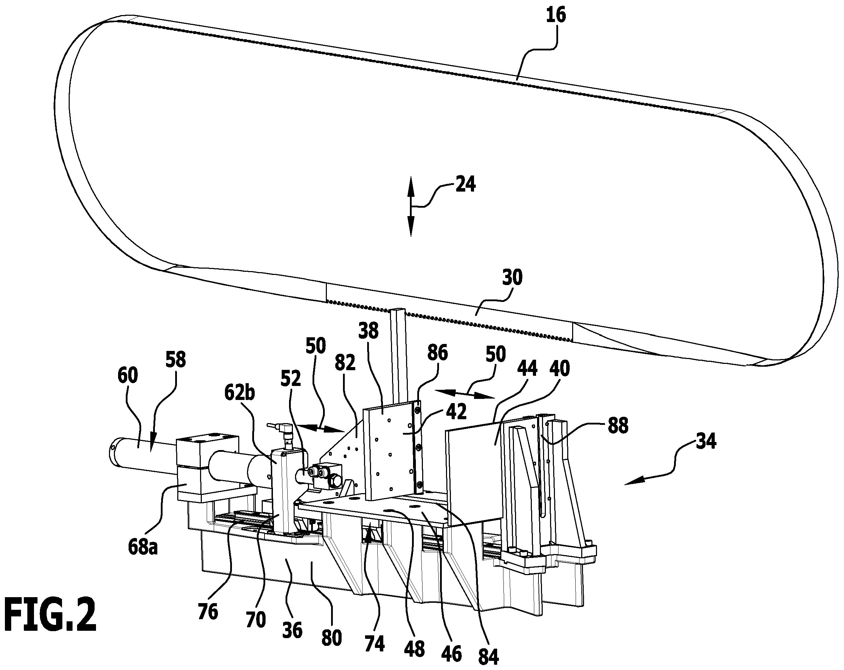

- Figur 2: eine perspektivische Teildarstellung der Werkzeugmaschine gemäß Figur 1;
- Figur 3: eine Ansicht der Werkzeugmaschine gemäß Figur 1 in der Richtung A;

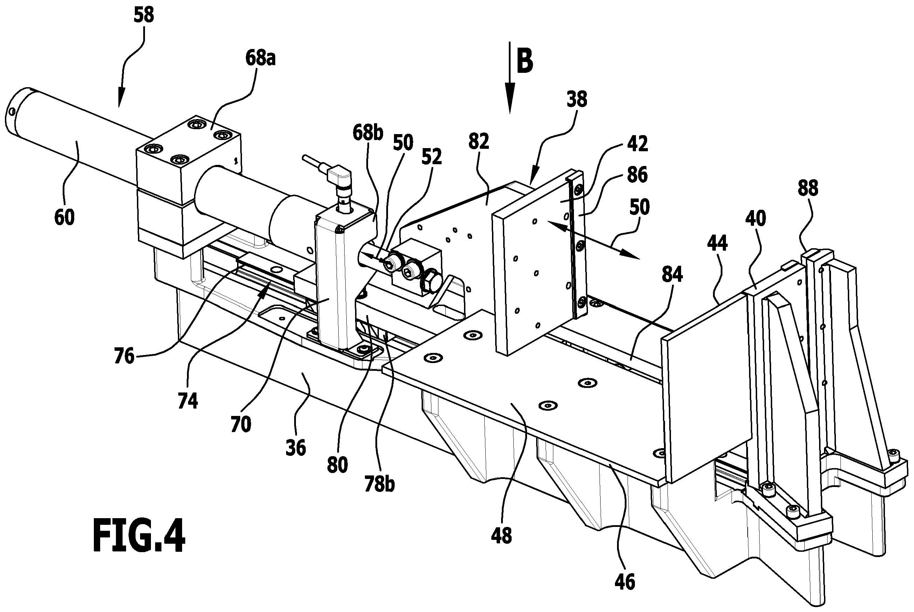

- Figur 4: eine perspektivische Darstellung eines Ausführungsbeispiels einer Werkstück-Spannvorrichtung;

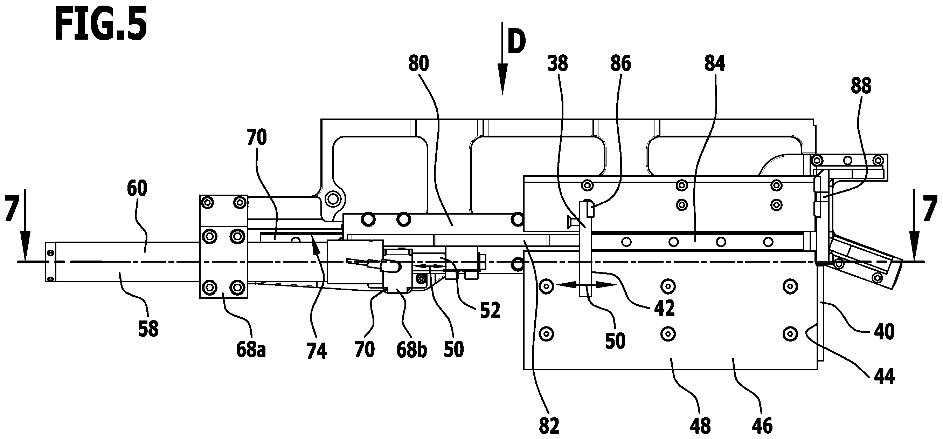

- Figur 5: eine Ansicht der Werkstück-Spannvorrichtung gemäß Figur 4 in der Richtung B (Draufsicht);
- Figur 6: eine Explosionsdarstellung der Werkstück-Spannvorrichtung gemäß Figur 4;
- Figur 7: eine Schnittansicht längs der Linie 7-7 gemäß Figur 5;
- Figur 8: eine vergrößerte Darstellung des Bereichs C in Figur 7;
- Figur 9: eine vergrößerte Teilansicht der Werkstück-Spannvorrichtung in der Richtung D gemäß Figur 5 bei einer ersten Stellung eines Betätigungselements; und
- Figur 10: die gleiche Ansicht wie in Figur 9 bei einer anderen Stellung des Betätigungselements.

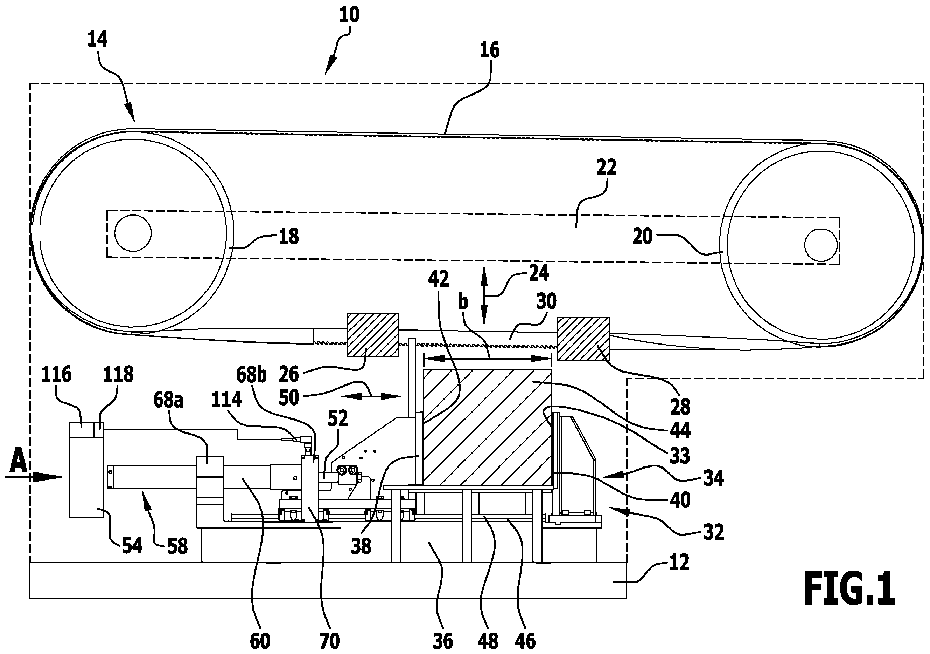

Ein Ausführungsbeispiel einer erfindungsgemäßen Werkzeugmaschine, welche in Figur 1 schematisch gezeigt und dort mit 10 bezeichnet ist, ist eine Sägemaschine und insbesondere Bandsägemaschine. Die Werkzeugmaschine 10 umfasst ein Maschinengestell 12. An dem Maschinengestell 12 ist ein Werkzeughalter 14 gehalten. Bei dem Ausführungsbeispiel einer Bandsägemaschine hält der Werkzeughalter 14 ein Sägeband 16. Insbesondere umfasst der Werkzeughalter 14 eine erste Rolle 18 und eine beabstandete zweite Rolle 20. Die erste Rolle 18 und die zweite Rolle 20 halten das endlose Sägeband 16 und das Sägeband 16 führt eine Umlaufbewegung durch. Es ist dazu ein entsprechender Antrieb (in Figur 1 nicht gezeigt) vorgesehen.

Die erste Rolle 18 und die zweite Rolle 20 sind an einem Schlitten 22 gehalten. Dieser Schlitten 22 ist relativ zu dem Maschinengestell 12 höhenbeweglich und insbesondere höhenverschieblich. Eine entsprechende Verschiebungsrichtung ist in Figur 1 mit dem Bezugszeichen 24 angedeutet.

Dem Werkzeughalter 14 ist ein erstes Ausrichtelement 26 und ein beabstandetes zweites Ausrichtelement 28 zugeordnet. Zwischen dem ersten Ausrichtelement 26 und dem zweiten Ausrichtelement 28 ist ein Bereich 30 des Sägebands 16 derart ausgerichtet, dass es ein Werkstück 33 bei Zubewegung auf das Maschinengestell 12 hin durchsägen kann.

An dem Maschinengestell 12 ist ferner ein Werkstückhalter 32 angeordnet. Erfindungsgemäß umfasst der Werkstückhalter 32 eine Werkstück-Spannvorrichtung 34 beziehungsweise ist als solche ausgebildet.

Die Werkstück-Spannvorrichtung 34 hat eine Basis 36, welche fest mit dem Maschinengestell 12 verbunden ist oder Teil des Maschinengestells 12 ist.

An der Basis 36 ist eine erste Spannbacke 38 angeordnet. Es ist ferner eine zu der ersten Spannbacke 38 beabstandete zweite Spannbacke 40 vorgesehen.

Die erste Spannbacke 38 weist eine erste Spannfläche 42 auf. Die zweite Spannbacke 40 weist eine zweite Spannfläche 44 auf. Die erste Spannfläche 42 und die zweite Spannfläche 44 sind insbesondere Ebenen, wobei vorzugsweise die erste Spannfläche 42 und die zweite Spannfläche 44 parallel zueinander ausgerichtet sind. Das Werkstück 33 lässt sich zwischen der ersten Spannfläche 42 und der zweiten Spannfläche 44 einspannen, um es für einen Bearbeitungsvorgang mit dem Sägeband 16 zu fixieren.

Die Werkstück-Spannvorrichtung 34 weist ferner ein Auflageelement 46 auf, auf welches das Werkstück 33 zur Bearbeitung auflegbar ist. Das Auflageelement 46 hat eine Auflagefläche 48, welche insbesondere eben ausgebildet ist.

Die erste Spannfläche 42 und die zweite Spannfläche 44 sind quer und insbesondere senkrecht zu der Auflagefläche 48 orientiert.

Das Auflageelement 46 ist fest mit der Basis 36 verbunden oder Teil der Basis 36. Die zweite Spannbacke 40 ist fest mit der Basis 36 verbunden. Die erste Spannbacke 38 ist verschieblich in einer Verschiebungsrichtung 50 relativ zu der Basis 30. Die Verschiebungsrichtung 50 liegt dabei insbesondere quer zu der ersten Spannfläche 42 beziehungsweise der zweiten Spannfläche 44 und liegt insbesondere senkrecht zu der ersten Spannfläche 42 beziehungsweise der zweiten Spannfläche 44. Weiterhin liegt die Verschiebungsrichtung 50 insbesondere parallel zu der Auflagefläche 48.

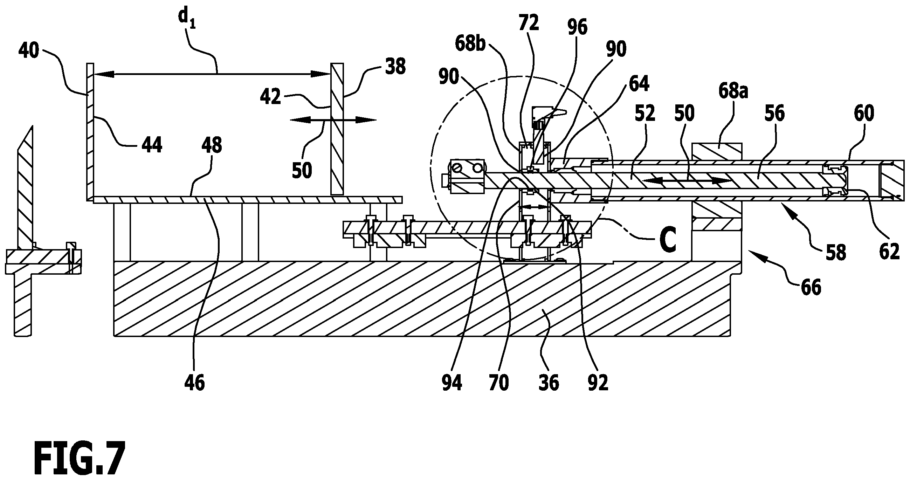

Durch die Verschieblichkeit der ersten Spannbacke 38 relativ zu der zweiten Spannbacke 40 ist eine Öffnungsweite d₁ als Abstand zwischen der ersten Spannbacke 38 und der zweiten Spannbacke 40 feststellbar einstellbar (vgl. beispielsweise Figur 7). Insbesondere lässt sich durch entsprechende Einstellung der Öffnungsweite d₁ größer als eine Breite b des Werkstücks 33 das Werkstück 33 in den Aufnahmeraum zwischen der ersten Spannbacke 38 und der zweiten Spannbacke 40 einlegen und durch entsprechende Verkleinerung der Öffnungsweite d₁ lässt sich dann das Werkstück 33 in dem Aufnahmeraum zwischen der ersten Spannbacke 38 und der zweiten Spannbacke 40 unter Auflage auf die Auflagefläche 48 einspannen und dadurch für eine nachfolgende Werkstückbearbeitung fixieren.

An der ersten Spannbacke 38 ist ein Betätigungselement 52 fixiert. Das Betätigungselement 52 ist in der Verschiebungsrichtung 50 verschieblich und insbesondere linear verschieblich.

Dem Betätigungselement 52 ist ein Antrieb 54 zugeordnet. Der Antrieb 54 ist beabstandet zu der ersten Spannbacke 38 und das Betätigungselement 52 sorgt für die Kraftübertragung von dem Antrieb 54 auf die erste Spannbacke 38.

Dieser Antrieb 54 bewirkt eine Verschiebungsbetätigung des Betätigungselements 52, wobei über den Antrieb 54 auch eine Verschiebungsposition des Betätigungselements 52 einstellbar und festlegbar ist. Dadurch lässt sich insbesondere eine Spannposition der ersten Spannbacke 38 zur Klemmfixierung eines Werkstücks 33 zwischen der ersten Spannbacke 38 und der zweiten Spannbacke 40 für eine Werkstückbearbeitung festlegen.

Bei einem Ausführungsbeispiel ist das Betätigungselement 52 eine Stange oder Spindel 56 (vgl. beispielsweise Figur 7) einer Kolbeneinheit 58. Die Kolbeneinheit 58 umfasst einen Zylinder 60, in welchem ein Kolben 62 angeordnet ist. An dem Kolben 62 wiederum sitzt die Spindel 56 als Kolbenstange.

Der Antrieb 54 ist ein hydraulischer Antrieb, wobei durch entsprechende hydraulische Beaufschlagung des Kolbens 62 in dem Zylinder 60 eine lineare Verschiebungsbewegung und Verschiebungsposition des Betätigungselements 52 und damit der ersten Spannbacke 38 einstellbar ist.

Die Kolbeneinheit 58 weist dazu eine entsprechende Verschiebungs-Lagereinrichtung 64 für die Spindel 56 auf.

An der Basis 36 ist eine Halteeinrichtung 66 gehalten, welche den Zylinder 60 translationsfest an der Basis 36 hält.

Bei einem ersten Ausführungsbeispiel umfasst die Halteeinrichtung 66 ein erstes Halteelement 68a und ein beabstandetes zweites Halteelement 68b, welche an der Basis 36 fixiert sind. Über diese ist der Zylinder 60 in einem Höhenabstand zu der Basis 36 fixiert. Das Betätigungselement 52 ist dann in einem Höhenabstand zu der Basis 36 relativ zu der Basis 36 in der Verschiebungsrichtung 50 (welches auch die Verschiebungsrichtung der ersten Spannbacke 38 ist) verschieblich.

Das zweite Halteelement 68b ist als Gehäuse 70 ausgebildet. Dieses Gehäuse 70 weist einen Innenraum 72 auf, welcher teilweise oder vollständig geschlossen ist.

Es ist auch möglich, dass der Antrieb 54 beispielsweise ein pneumatischer Antrieb ist oder ein motorischer Antrieb oder ein elektromotorischer Antrieb ist. Der Antrieb 54 bewirkt eine Verschiebungsbewegung und Positionsfeststellung des Betätigungselements 52 und damit der ersten Spannbacke 38.

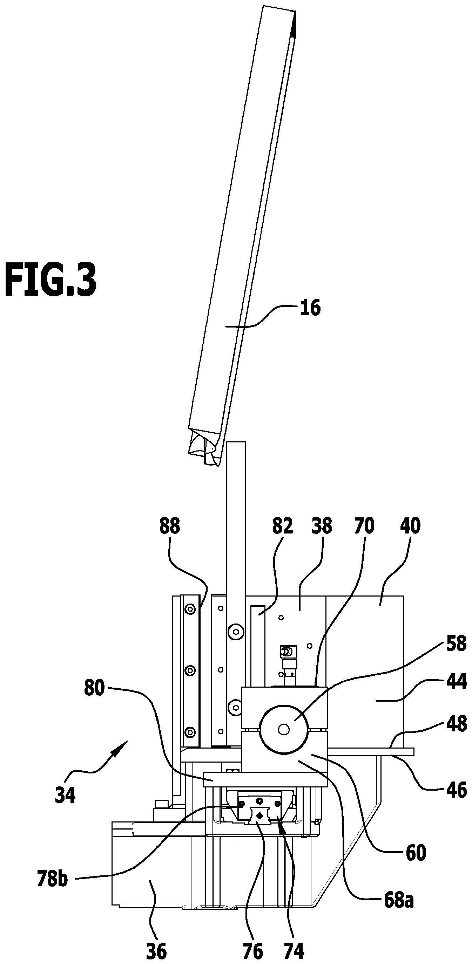

Der ersten Spannbacke 38 ist eine Führungseinrichtung 74 zugeordnet (vgl. beispielsweise Figur 3).

Die Führungseinrichtung 74 ist insbesondere als Gleitführung ausgebildet.

Bei einem Ausführungsbeispiel umfasst die Führungseinrichtung 74 eine Leiste 76, welche an der Basis 36 angeordnet ist.

An dieser Leiste 76 sitzen ein oder mehrere Gleitschuhe. Bei dem gezeigten Ausführungsbeispiel sitzen an der Leiste 76 beabstandete Gleitschuhe 78a, 78b.

Die erste Spannbacke 38 weist eine Halteplatte 80 auf. Die Gleitschuhe 78a, 78b sind an der Halteplatte 80 fixiert.

Die Gleitschuhe 78a, 78b liegen dabei insbesondere bezogen auf eine Höhenrichtung der Basis 36 unterhalb des Betätigungselements 52.

An der Halteplatte 80 ist eine Strebe 82 angeordnet, welche beispielsweise Trapezform hat. An der Strebe 82 wiederum sitzt ein entsprechendes Element mit der ersten Spannfläche 42.

Die Strebe 82 ist plattenförmig ausgebildet, wobei sie quer zu der ersten Spannfläche 42 orientiert ist.

In dem Auflageelement 46 ist eine durchgehende Nut 84 gebildet. Die Strebe 82 ist durch die Nut 84 durchgetaucht, so dass die erste Spannfläche 42 oberhalb der Auflagefläche 48 liegt. Die Halteplatte 80 ist unterhalb des Auflageelements 46 positioniert.

Die erste Spannfläche 42 weist eine solche Breite auf, dass sie beabstandet zu dem Sägeband 16 ist, wenn dieses in der Richtung 24 auf das Maschinengestell 12 zum Durchsägen des Werkstücks 33 bewegt wird.

Es kann dabei vorgesehen sein, dass an der ersten Spannbacke 38 eine Führungsleiste 86 angeordnet ist, an welcher das Sägeband 16 mit einer Außenseite entlang gleitbar ist.

Bei einem Ausführungsbeispiel weist die zweite Spannbacke 40 eine durchgehende Nut 88 auf, welche quer und insbesondere senkrecht zu der Nut 84 orientiert ist. Durch diese Nut 88 ist das Sägeband 16 durchtauchbar.

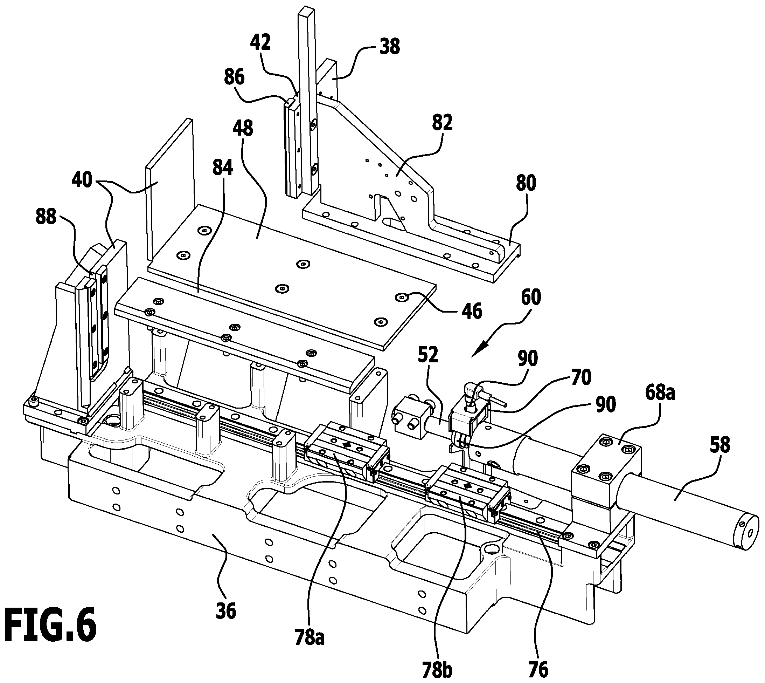

Auf dem Betätigungselement 52 sitzt in dem Innenraum 72 des Gehäuses 70 ein Geber 90 (vgl. die Figuren 6 bis 10). Der Geber 90 ist insbesondere als Ringelement 92 ausgebildet mit einer Ringöffnung 94. Die Ringöffnung 94 ist in ihrer geometrischen Gestalt an die geometrische Gestalt des Betätigungselements 52 angepasst.

Beispielsweise ist die Ringöffnung 94 im Querschnitt kreisförmig, wenn das Betätigungselement 52 mindestens in dem Bereich, in dem der Geber 90 sitzt, eine zylindrische Außengestalt hat.

Das Betätigungselement 52 ist durch die Ringöffnung 94 durchgetaucht und der Geber 90 sitzt auf dem Betätigungselement 52.

Der Geber 90 umfasst ferner ein Stellelement 96, welches insbesondere als Stellring ausgebildet ist.

Bei einem Ausführungsbeispiel weist das Ringelement 92 zu der Ringöffnung 94 eine Nut 98 auf.

Bei einem Ausführungsbeispiel ist die Nut 98 eine Ringnut.

In dieser Nut 98 sitzt das Stellelement 96 und insbesondere ein Stellring.

Das Stellelement 96 ist insbesondere ein elastisches Element. Beispielsweise ist das Stellelement 96 durch einen O-Ring ausgebildet.

Über das Stellelement 96 sitzt der Geber 90 kraftschlüssig auf dem Betätigungselement 52 derart, dass einerseits der Geber 90 bei einer Bewegung des Betätigungselements 52 mit diesem mitgenommen wird und eine Verschieblichkeit in der Verschiebungsrichtung 50 des Gebers 90 erfolgt, und andererseits, wie unten noch näher beschrieben wird, unter bestimmten Bedingungen der Geber 90 relativ zu der Basis 36 festhaltbar ist und dann eine relative Verschiebung des Betätigungselements 52 zu dem Geber 90 erfolgen kann.

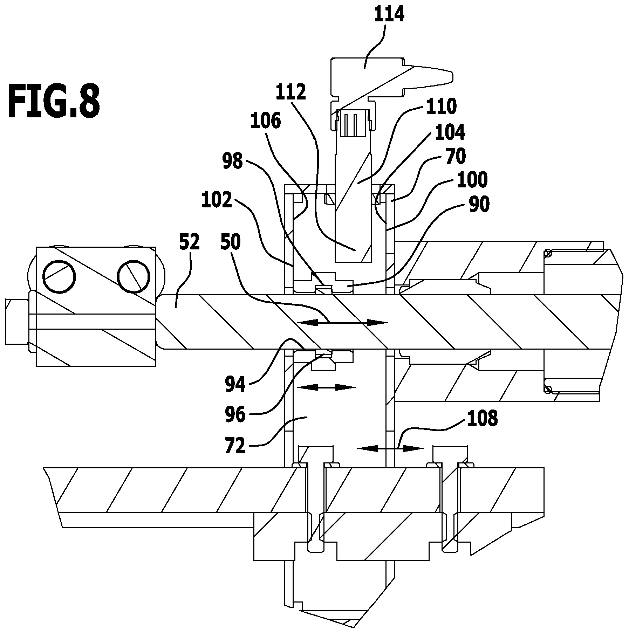

Die Werkstück-Spannvorrichtung 34 weist einen ersten Anschlag 100 und einen beabstandeten zweiten Anschlag 102 für den Geber 90 auf (vgl. beispielsweise Figur 8). Der erste Anschlag 100 ist weiter entfernt von der ersten Spannbacke 38 als der zweite Anschlag 102. Eine Abstandsrichtung zwischen dem ersten Anschlag 100 und dem zweiten Anschlag 102 liegt parallel zur Verschiebungsrichtung 50 des Betätigungselements 52.

Bei einem Ausführungsbeispiel ist der erste Anschlag 100 durch eine erste Innenseite 104 des Gehäuses 70 gebildet. Der zweite Anschlag 102 ist durch eine gegenüberliegende zweite Innenseite 106 des Gehäuses 70 gebildet.

Zwischen dem ersten Anschlag 100 und dem zweiten Anschlag 102 ist der Geber 90 verschieblich.

Der erste Anschlag 100 und der zweite Anschlag 102 sind translationsfest zu der Basis 36.

Bei einem Ausführungsbeispiel sind eine Position des ersten Anschlags 100 und/oder eine Position des zweiten Anschlags 102 in der Verschiebungsrichtung 50 relativ zu der Basis 36 feststellbar einstellbar. Dies ist in Figur 8 durch den Pfeil mit dem Bezugszeichen 108 angedeutet. Es lässt sich dadurch insbesondere der Abstand zwischen dem ersten Anschlag 100 und dem zweiten Anschlag 102 feststellbar einstellen. Es ist dabei vorgesehen, dass bei einem Werkstück-Spannvorgang an der Werkstück-Spannvorrichtung 34 der erste Anschlag 100 und der zweite Anschlag 102 translationsfest zu der Basis 36 fixiert ist.

Es ist grundsätzlich auch möglich, dass der erste Anschlag 100 und der zweite Anschlag 102 nicht einstellbar fest zu der Basis 36 angeordnet sind.

Dem Geber 90 ist ein Sensor 110 zugeordnet. Dieser Sensor 110 ist mindestens teilweise in dem Innenraum 72 des Gehäuses 70 angeordnet. Insbesondere ist ein Sensorkopf 112, welcher ein oder mehrere bezüglich des Gebers 90 sensitive Elemente umfasst, geschützt in dem Innenraum 72 des Gehäuses 70 angeordnet.

Der Sensor 110 erfasst eine oder mehrere bestimmte Positionen des Gebers 90.

Beispielsweise ist der Sensorkopf 112 als berührungsloser Näherungssensor beziehungsweise Abstandssensor ausgebildet.

Bei einem Ausführungsbeispiel ist der Sensor 110 als Schaltsensor ausgebildet, welcher ein Schaltsignal liefert, wenn der Geber 70 an dem ersten Anschlag 100 anliegt.

Der Sensor 110 kann beispielsweise auch als Kontaktschalter (Mikroschalter) ausgebildet sein, welcher bei Kontakt mit dem Geber 90 ein Schaltsignal erzeugt.

Dem Sensor 110 ist eine Anschlusseinrichtung 114 zugeordnet, über welche der Sensor mit elektrischer Energie versorgbar ist. Ferner kann über die Anschlusseinrichtung 114 ein Sensorsignal von dem Sensor 110 abgegriffen werden.

Der Sensor 110 ist signalwirksam mit einer Steuerungseinrichtung 116 verbunden. Die Steuerungseinrichtung 116 ist insbesondere Teil der Steuerung der Werkzeugmaschine 10. Die Steuerungseinrichtung 116 steuert den Antrieb 54 und damit die Bewegung und Position des Betätigungselements 52 und damit wiederum die Bewegung und Position der ersten Spannbacke 38 an.

Die Steuerungseinrichtung 116 umfasst eine Verfahrwegbegrenzungseinrichtung 118, durch welche, wie untenstehend noch näher erläutert wird, ein Verfahrweg der ersten Spannbacke 38 begrenzt wird. Der Verfahrweg d₂ ist dabei die Differenz zwischen der Öffnungsweite d₁ der ersten Spannbacke 38 zu der zweiten Spannbacke 40 abzüglich der Breite b des Werkstücks 33.

Die Werkstück-Spannvorrichtung 34 funktioniert wie folgt:

Zum Einlegen des Werkstücks 33 in den Aufnahmeraum zwischen der ersten Spannbacke 38 und der zweiten Spannbacke 40 auf dem Auflageelement 46 muss die Öffnungsweite d₁ so eingestellt werden, dass diese größer ist als die Breite b des Werkstücks 33. Dazu muss entsprechend die erste Spannbacke 38 von der zweiten Spannbacke 40 weggefahren werden. Dieses Wegfahren wird durch den Antrieb 54 bewirkt, wobei dieser über das Betätigungselement 52 auf die erste Spannbacke 38 wirkt.

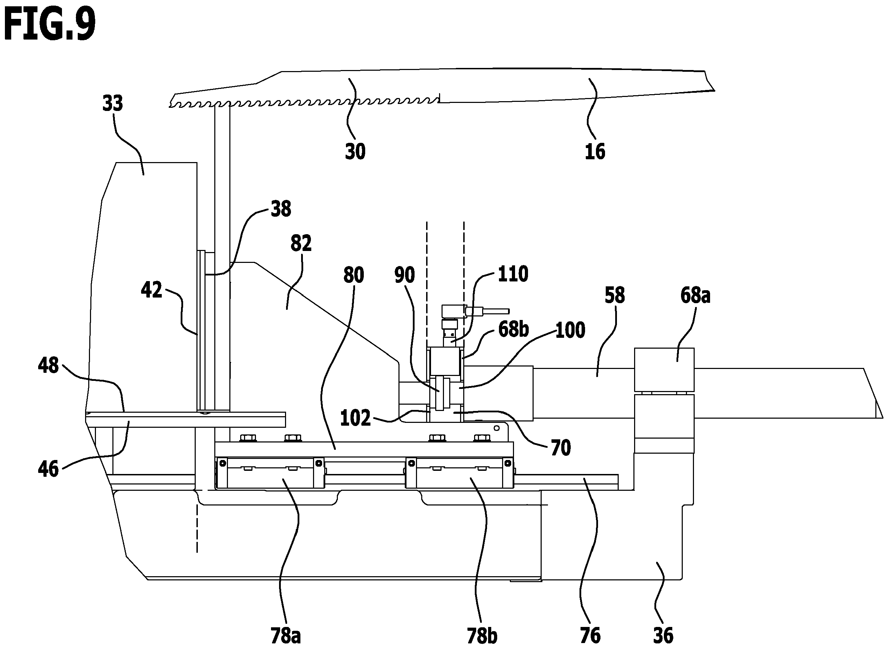

In Figur 9 ist eine Ausgangsstellung für den Geber 90 gezeigt, bei dem dieser an dem zweiten Anschlag 102 anliegt (vgl. auch Figur 8). Diese Ausgangsstellung ist beispielsweise eine Stellung, bei der zuvor ein Werkstück fixiert wurde und das Werkzeug bearbeitet wurde. Zum Herausnehmen des bearbeiteten Werkstücks aus der Werkzeugmaschine 10 und zum Einlegen eines neuen zu bearbeitenden Werkstücks 33 wird entsprechend die erste Spannbacke 38 von der zweiten Spannbacke 40 wegbewegt.

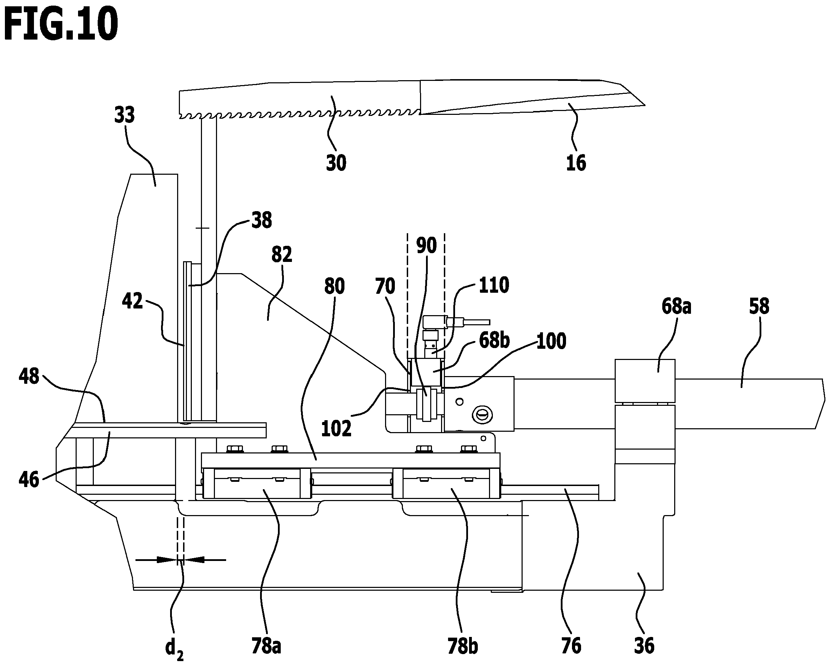

Bei dieser Bewegung wird der Geber 90 von dem zweiten Anschlag 102 in Richtung auf den ersten Anschlag 100 zu bewegt. In Figur 10 ist eine entsprechende Zwischenstellung in dieser Bewegung gezeigt.

Der Geber 90 wird dabei von dem Betätigungselement 52 mitgenommen, bis er den ersten Anschlag 100 erreicht. Die kraftschlüssige Fixierung des Gebers 90 an dem Betätigungselement 52 bewirkt eine Translationsmitführung des Gebers 90 durch das Betätigungselement 52.

Wenn der Geber 90 den ersten Anschlag 100 erreicht, und dort anliegt, dann bewirkt eine Weiterbewegung des Betätigungselements 52 in einer Richtung, bei welcher die Öffnungsweite d₁ zwischen der ersten Spannbacke 38 und der zweiten Spannbacke 40 weiter vergrößert wird, dass der Geber 90 bezüglich der Basis 36 festliegt, das heißt nicht mehr weiterverschoben wird, und das Betätigungselement 52 dann relativ zu dem Geber 90 verschoben wird.

Der Sensor 110 und der Geber 90 sind so aneinander angepasst, dass der Sensor 110 ein entsprechendes Signal liefert, wenn der Geber 90 den ersten Anschlag 100 erreicht. Dieses Signal ist insbesondere ein Schaltsignal, welches der Steuerungseinrichtung 116 und dabei insbesondere der Verfahrwegbegrenzungseinrichtung 118 übermittelt wird. Dieses Schaltsignal bewirkt, dass die Steuerungseinrichtung 116 den Antrieb 54 so ansteuert, dass die Verschiebung des Betätigungselements 52 mit der Wegbewegung der ersten Spannbacke 38 von der zweiten Spannbacke 40 weg gestoppt wird. Dadurch wird der Verfahrweg d₂ begrenzt.

Insbesondere wird der Verfahrweg d₂ auf einen Weg von höchstens 6 mm begrenzt. Es wird dadurch eine Sicherheitsfunktion realisiert, wie sie beispielsweise von der DIN 13898 gefordert wird. Es wird dadurch die Quetschgefahr für einen Bediener, der ein neu zu bearbeitendes Werkstück 33 einlegt, minimiert, da sichergestellt wird, dass Verfahrwege oberhalb einer bestimmten Schwelle wie beispielsweise 6 mm nicht auftreten können.

Bei dieser Betriebsführung wird der Geber 90 bei der Vergrößerung der Öffnungsweite d₁ von dem zweiten Anschlag 102 weggeschoben, bis er den ersten Anschlag 100 erreicht. Es wird dann eine Weiterverschiebung des Betätigungselements 52 abgeschaltet. Wie in Figur 10 gezeigt ist, lässt sich dadurch eine Begrenzung des Verfahrwegs d₂ auf einfache Weise realisieren.

Nachdem das neu zu bearbeitende Werkstück 33 eingelegt ist, wird die erste Spannbacke 38 wieder in Richtung der zweiten Spannbacke 40 zubewegt, um das Werkstück 33 zwischen der ersten Spannbacke 38 und der zweiten Spannbacke 40 für eine nachfolgende Bearbeitung einzuspannen.

Bei dieser Zubewegung bewegt sich der Geber 90 aufgrund der kraftschlüssigen Ankopplung an das Betätigungselement 52 mit dem Betätigungselement 52 von dem ersten Anschlag 100 weg bis zum zweiten Anschlag 102. Wenn der zweite Anschlag 102 erreicht ist und der Geber 90 an dem zweiten Anschlag 102 anliegt, dann kann sich das Betätigungselement 52 weiter zu dem Geber 90 verschieben; der Geber 90 liegt dann translationsfest bezüglich der Basis 36. Es erfolgt dann die Einspannung des Werkstücks 33.

Es kann dann eine nachfolgende Bearbeitung mit dem Sägeband 16 erfolgen, indem dieses insbesondere in der Richtung 24 mit dem Schlitten 22 auf das Werkstück 33 zubewegt wird und ein Schnitt in das Werkstück 33 eingebracht wird und insbesondere das Werkstück 33 durchgesägt wird.

Durch die erfindungsgemäße Werkstück-Spannvorrichtung 34 ist bei einfachem konstruktivem Aufbau eine effektive Verfahrwegbegrenzung erreicht, um insbesondere beim Einlegen eines neuen zu bearbeitenden Werkstücks 33 die Quetschgefahr zu minimieren. Insbesondere lässt sich auf einfache und effektive Weise eine Begrenzung des Verfahrwegs d₂ auf beispielsweise höchstens 6 mm erreichen.

### Bezugszeichenliste

- 10: Werkzeugmaschine
- 12: Maschinengestell
- 14: Werkzeughalter
- 16: Sägeband
- 18: Erste Rolle
- 20: Zweite Rolle
- 22: Schlitten
- 24: Verschiebungsrichtung
- 26: Erstes Ausrichtelement
- 28: Zweites Ausrichtelement
- 30: Bereich
- 32: Werkstückhalter
- 33: Werkstück
- 34: Werkstück-Spannvorrichtung
- 36: Basis
- 38: Erste Spannbacke
- 40: Zweite Spannbacke
- 42: Erste Spannfläche
- 44: Zweite Spannfläche
- 46: Auflageelement
- 48: Auflagefläche
- 50: Verschiebungsrichtung
- 52: Betätigungselement
- 54: Antrieb
- 56: Spindel
- 58: Kolbeneinheit
- 60: Zylinder
- 62: Kolben
- 64: Verschiebungs-Lagereinrichtung
- 66: Halteeinrichtung
- 68a: Erstes Halteelement
- 68b: Zweites Halteelement
- 70: Gehäuse
- 72: Innenraum
- 74: Führungseinrichtung
- 76: Leiste
- 78a: Gleitschuh
- 78b: Gleitschuh
- 80: Halteplatte
- 82: Strebe
- 84: Nut
- 86: Führungsleiste
- 88: Nut
- 90: Geber
- 92: Ringelement
- 94: Ringöffnung
- 96: Stellelement
- 98: Nut
- 100: Erster Anschlag
- 102: Zweiter Anschlag
- 104: Erste Innenseite
- 106: Zweite Innenseite
- 108: Pfeil
- 110: Sensor
- 112: Sensorkopf
- 114: Anschlusseinrichtung
- 116: Steuerungseinrichtung
- 118: Verfahrwegbegrenzungseinrichtung

## Patentansprüche

1. Werkstück-Spannvorrichtung für eine Werkzeugmaschine (10), umfassend eine Basis (36), eine erste Spannbacke (38), welche relativ zu der Basis (36) verschieblich ist, eine zweite Spannbacke (40), wobei ein Werkstück (33) zwischen der ersten Spannbacke (38) und der zweiten Spannbacke (40) einspannbar ist, einen Antrieb (54), ein Betätigungselement (52), welches relativ zu der Basis (36) verschieblich ist und welches an die erste Spannbacke (38) gekoppelt ist, wobei eine Verschiebungsbewegung des Betätigungselements (52) durch den Antrieb (54) bewirkt ist und das Betätigungselement (52) eine Verschiebung der ersten Spannbacke (38) bewirkt, einen Geber (90), welcher an dem Betätigungselement (52) angeordnet ist und mit dem Betätigungselement (52) verschieblich ist und relativ zu dem Betätigungselement (52) verschieblich ist, einen ersten Anschlag (100) und einen beabstandeten zweiten Anschlag (102) für den Geber (90), zwischen welchen der Geber (90) mit dem Betätigungselement (52) verschieblich ist, wobei bei Anliegen des Gebers (90) an dem ersten Anschlag (100) oder an dem zweiten Anschlag (102) der Geber (90) relativ zu dem Betätigungselement (52) verschieblich ist, und einen Sensor (110), durch welchen eine oder mehrere Positionen des Gebers (90) detektierbar sind.

2. Werkstück-Spannvorrichtung nach Anspruch 1, **dadurch gekennzeichnet, dass** der erste Anschlag (100) und der zweite Anschlag (102) translationsfest zu der Basis (36) angeordnet sind.

3. Werkstück-Spannvorrichtung nach Anspruch 1 oder 2, **dadurch gekennzeichnet, dass** eine Abstandsrichtung zwischen dem ersten Anschlag (100) und dem zweiten Anschlag (102) parallel zu einer Verschiebungsrichtung (50) des Betätigungselements (52) ist.

4. Werkstück-Spannvorrichtung nach einem der vorangehenden Ansprüche, **dadurch gekennzeichnet, dass** der erste Anschlag (100) und der zweite Anschlag (102) durch Innenseiten (104; 106) eines Gehäuses (70) gebildet sind, in welchem ein Sensorkopf (112) des Sensors (110) angeordnet ist, und insbesondere,
dass der Geber (90) in dem Gehäuse (70) positioniert ist.

5. Werkstück-Spannvorrichtung nach einem der vorangehenden Ansprüche, **dadurch gekennzeichnet, dass** der Geber (90) auf dem Betätigungselement (52) sitzt, und insbesondere,
dass der Geber (90) ein Ringelement (92) aufweist oder durch ein Ringelement (92) gebildet ist, wobei das Betätigungselement (52) durch eine Ringöffnung (94) durchgetaucht ist.

6. Werkstück-Spannvorrichtung nach einem der vorangehenden Ansprüche, **dadurch gekennzeichnet, dass** der Geber (90) kraftschlüssig an dem Betätigungselement (52) sitzt, und insbesondere,
dass der Geber (90) ein elastisches Element (96) aufweist, über welches der Geber (90) an dem Betätigungselement (52) sitzt, und insbesondere,
dass das elastische Element (96) ein O-Ring ist.

7. Werkstück-Spannvorrichtung nach einem der vorangehenden Ansprüche, **dadurch gekennzeichnet, dass** der Geber (90) einen oder mehrere Bereiche aufweist, bezüglich welchen der Sensor (110) sensitiv ist.

8. Werkstück-Spannvorrichtung nach einem der vorangehenden Ansprüche, **dadurch gekennzeichnet, dass** der Sensor (110) ein Näherungssensor oder Abstandssensor oder Kontaktschalter ist und/oder
dass der Sensor (110) ein berührungsloser Sensor ist und/oder
dass der Sensor (110) ein induktiver Sensor ist.

9. Werkstück-Spannvorrichtung nach einem der vorangehenden Ansprüche, **dadurch gekennzeichnet, dass** der Sensor (110) ein Schaltsignal generiert, wenn der Geber (90) den ersten Anschlag (100) erreicht, wobei der erste Anschlag (100) weiter entfernt von der ersten Spannbacke (38) ist als der zweite Anschlag (102).

10. Werkstück-Spannvorrichtung nach einem der vorangehenden Ansprüche, **gekennzeichnet durch** eine Steuerungseinrichtung (116), welche signalwirksam an den Sensor (110) gekoppelt ist und welche den Antrieb (54) ansteuert, und insbesondere,
dass die Steuerungseinrichtung (116) eine Wegbewegung der ersten Spannbacke (38) von der zweiten Spannbacke (40) stoppt, wenn der Sensor (110) ein Schaltsignal für das Erreichen des ersten Anschlags (100) durch den Geber (90) bereitstellt, und insbesondere,
dass die Steuerungseinrichtung (116) eine Verfahrweg-Begrenzungseinrichtung (118) aufweist, welche eine Öffnungsweite (d₁) zwischen der ersten Spannbacke (38) und der zweiten Spannbacke (40) begrenzt, wobei ein Verfahrweg (d₂) die Öffnungsweite (d₁) abzüglich einer Werkstückbreite (b) ist, und insbesondere,
dass der Verfahrweg (d₂) auf höchstens 6 mm begrenzt ist.

11. Werkstück-Spannvorrichtung nach einem der vorangehenden Ansprüche, **dadurch gekennzeichnet, dass** mindestens eine der vorliegenden Größen feststellbar einstellbar ist:
(i) Position des ersten Anschlags (100);
(ii) Position des zweiten Anschlags (102);
(iii) Abstand zwischen dem ersten Anschlag (100) und dem zweiten Anschlag (102).

12. Werkstück-Spannvorrichtung nach einem der vorangehenden Ansprüche, **dadurch gekennzeichnet, dass** der erste Anschlag (100) weiter entfernt von der ersten Spannbacke (38) ist als der zweite Anschlag (102), wobei, wenn die erste Spannbacke (38) auf die zweite Spannbacke (40) zubewegt ist, der Geber (90) zunächst in Richtung des zweiten Anschlags (102) mitgenommen mit dem Betätigungselement (52) verschoben wird, bis er an dem zweiten Anschlag (102) anliegt und dann der Geber (90) relativ zu dem zweiten Anschlag (102) nicht weiter verschoben wird, und, wenn die erste Spannbacke (38) von der zweiten Spannbacke (40) wegbewegt ist, der Geber (90) mitgenommen mit dem Betätigungselement (52) in Richtung des ersten Anschlags (100) verschoben wird, bis er an diesem anliegt und bei Weiterbewegung des Betätigungselements (52) nicht weiter verschoben wird.

13. Werkstück-Spannvorrichtung nach einem der vorangehenden Ansprüche, **dadurch gekennzeichnet, dass** der Antrieb (54) ein hydraulischer, pneumatischer oder motorischer Antrieb ist und/oder
dass das Betätigungselement (52) Teil einer Kolbeneinheit (58) und insbesondere eine Kolbenstange ist.

14. Werkstück-Spannvorrichtung nach einem der vorangehenden Ansprüche, **dadurch gekennzeichnet, dass** durch den Antrieb (57) eine Abstandsposition zwischen der ersten Spannbacke (38) und der zweiten Spannbacke (40) feststellbar ist.

15. Werkzeugmaschine, umfassend ein Maschinengestell (12), mindestens einen Werkstückhalter (32) und mindestens einen Werkzeughalter (14), wobei der mindestens eine Werkstückhalter (32) eine Werkstück-Spannvorrichtung (34) gemäß einem der vorangehenden Ansprüche ist oder umfasst, und insbesondere,
dass die Basis (36) Teil des Maschinengestells (12) ist oder fest an diesem angeordnet ist, und insbesondere
**gekennzeichnet durch** eine Ausbildung als Sägemaschine und insbesondere Bandsägemaschine, wobei ein Werkzeug ein Sägewerkzeug und insbesondere ein Sägeband (16) ist.

16. Verfahren zum Einspannen eines Werkstücks an einer Werkstück-Spannvorrichtung nach einem der Ansprüche 1-14, bei dem das Werkstück (33) zwischen einer verschieblichen ersten Spannbacke (38) und einer zweiten Spannbacke (40) eingespannt wird, wobei die erste Spannbacke (38) mittels eines Betätigungselements (52) verschoben wird und an dem Betätigungselement (52) ein Geber (90) angeordnet ist, für den ein oder mehrere bestimmte Positionen durch einen Sensor (110) erfasst werden, und bei dem zwischen einem ersten Anschlag (100) und einem zweiten Anschlag (102) der Geber (90) durch das Betätigungselement (52) mitgenommen wird und der Geber (90) bei Anliegen an dem ersten Anschlag (100) und bei Anliegen an dem zweiten Anschlag (102) unverschieblich bezüglich einer Basis (36) ist und relativ zu dem Betätigungselement (52) verschieblich ist.

17. Verfahren nach Anspruch 16, **dadurch gekennzeichnet, dass** bei Erreichen des ersten Anschlags (100) durch den Geber (90), wobei der erste Anschlag (100) weiter entfernt von der ersten Spannbacke (38) ist als der zweite Anschlag (102), der Sensor (110) ein Schaltsignal erzeugt, und insbesondere,
dass eine Steuerungseinrichtung (116) aufgrund des Schaltsignals des Sensors (110) eine weitere Auseinanderbewegung der ersten Spannbacke (38) von der zweiten Spannbacke (40) weg stoppt, um einen Verfahrweg (d₂) zu begrenzen.

## Claims

1. A workpiece clamping device for a machine tool (10), comprising a base (36), a first clamping jaw (38) which is displaceable relative to the base (36), a second clamping jaw (40), wherein a workpiece (33) is clampable between the first clamping jaw (38) and the second clamping jaw (40), a drive (54), an actuating element (52) which is displaceable relative to the base (36) and which is coupled to the first clamping jaw (38), wherein a displacement movement of the actuating element (52) is brought about by the drive (54) and the actuating element (52) brings about a displacement of the first clamping jaw (38), a transmitter (90) which is arranged on the actuating element (52) and is displaceable together with the actuating element (52) and is displaceable relative to the actuating element (52), a first stop (100) and a spaced-apart second stop (102) for the transmitter (90), between which stops the transmitter (90) is displaceable together with the actuating element (52), wherein, when the transmitter (90) abuts against the first stop (100) or against the second stop (102), the transmitter (90) is displaceable relative to the actuating element (52), and a sensor (110) by means of which one or more positions of the transmitter (90) are detectable.

2. The workpiece clamping device as claimed in claim 1, **characterized in that** the first stop (100) and the second stop (102) are arranged in a translationally fixed manner with respect to the base (36).

3. The workpiece clamping device as claimed in claim 1 or 2, **characterized in that** a direction of the spacing between the first stop (100) and the second stop (102) is parallel to a displacement direction (50) of the actuating element (52).

4. The workpiece clamping device as claimed in one of the preceding claims, **characterized in that** the first stop (100) and the second stop (102) are formed by inner sides (104; 106) of a housing (70) in which a sensor head (112) of the sensor (110) is arranged and in particular **in that** the transmitter (90) is positioned in the housing (70).

5. The workpiece clamping device as claimed in one of the preceding claims, **characterized in that** the transmitter (90) is seated on the actuating element (52), and in particular **in that** the transmitter (90) has an annular element (92) or is formed by an annular element (92), wherein the actuating element (52) is passed through an annular opening (94).

6. The workpiece clamping device as claimed in one of the preceding claims, **characterized in that** the transmitter (90) is seated in force-locking manner on the actuating element (52), and in particular **in that** the transmitter (90) has an elastic element (96) by means of which the transmitter (90) is seated on the actuating element (52), and in particular **in that** the elastic element (96) is an O ring.

7. The workpiece clamping device as claimed in one of the preceding claims, **characterized in that** the transmitter (90) has one or more regions, with respect to which the sensor (110) is sensitive.

8. The workpiece clamping device as claimed in one of the preceding claims, **characterized in that** the sensor (110) is a proximity sensor or distance sensor or contact switch and/or **in that** the sensor (110) is a contactless sensor and/or **in that** the sensor (110) is an inductive sensor.

9. The workpiece clamping device as claimed in one of the preceding claims, **characterized in that** the sensor (110) generates a switching signal when the transmitter (90) reaches the first stop (100), wherein the first stop (100) is further away from the first clamping jaw (38) than the second stop (102).

10. The workpiece clamping device as claimed in one of the preceding claims, **characterized by** a controller (116) which is coupled in terms of signal to the sensor (110) and which controls the drive (54), and in particular in that the controller (116) stops a movement of the first clamping jaw (38) away from the second clamping jaw (40) when the sensor (110) provides a switching signal indicating that the transmitter (90) has reached the first stop (100), and in particular in that the controller (116) has a travel limiter (118) which limits an opening width (d₁) between the first clamping jaw (38) and the second clamping jaw (40), wherein a travel (d₂) is the opening width (d₁) minus a workpiece width (b), and in particular in that the travel (d₂) is limited to at most 6 mm.

11. The workpiece clamping device as claimed in one of the preceding claims, **characterized in that** at least one of the variables present is settable to be fixed:
(i) position of the first stop (100);
(ii) position of the second stop (102);
(iii) spacing between the first stop (100) and the second stop (102).

12. The workpiece clamping device as claimed in one of the preceding claims, **characterized in that** the first stop (100) is further away from the first clamping jaw (38) than the second stop (102), wherein, when the first clamping jaw (38) is moved toward the second clamping jaw (40), the transmitter (90), carried along together with the actuating element (52), is first of all displaced in the direction of the second stop (102) until said transmitter abuts against the second stop (102) and then the transmitter (90) is not displaced further relative to the second stop (102), and, when the first clamping jaw (38) is moved away from the second clamping jaw (40), the transmitter (90), carried along together with the actuating element (52), is displaced in the direction of the first stop (100) until said transmitter abuts against the latter and is not displaced further upon further movement of the actuating element (52).

13. The workpiece clamping device as claimed in one of the preceding claims, **characterized in that** the drive (54) is a hydraulic, pneumatic or motorized drive, and/or **in that** the actuating element (52) is part of a piston unit (58) and in particular is a piston rod.

14. The workpiece clamping device as claimed in one of the preceding claims, **characterized in that** a position of the spacing between the first clamping jaw (38) and the second clamping jaw (40) is detectable by the drive (57).

15. A machine tool, comprising a machine frame (12), at least one workpiece holder (32) and at least one tool holder (14), wherein the at least one workpiece holder (32) is or comprises a workpiece clamping device (34) according to one of the preceding claims and in particular in that the base (36) is part of the machine frame (12) or is arranged fixedly thereon, and in particular **characterized by** being configured as a sawing machine and in particular a band sawing machine, wherein a tool is a sawing tool and in particular is a saw band (16).

16. A method for clamping a workpiece on a workpiece clamping device as claimed in one of claims 1-14, in which the workpiece (33) is clamped between a displaceable first clamping jaw (38) and a second clamping jaw (40), wherein the first clamping jaw (38) is displaced by means of an actuating element (52), and a transmitter (90), for which one or more defined positions are sensed by a sensor (110), is arranged on the actuating element (52), and in which the transmitter (90) is carried along between a first stop (100) and a second stop (102) by the actuating element (52), and the transmitter (90), on abutting against the first stop (100) and on abutting against the second stop (102), is non-displaceable with respect to a base (36) and is displaceable relative to the actuating element (52).

17. The method as claimed in claim 16, **characterized in that**, when the transmitter (90) reaches the first stop (100), wherein the first stop (100) is further away from the first clamping jaw (38) than the second stop (102), the sensor (110) generates a switching signal, and in particular **in that**, on the basis of the switching signal of the sensor (110), a controller (116) stops a further movement apart of the first clamping jaw (38) away from the second clamping jaw (40), in order to limit a travel (d₂).

## Revendications

1. Dispositif de serrage de pièce pour une machine-outil (10), comprenant une base (36), une première mâchoire de serrage (38) qui est déplaçable par rapport à la base (36), une seconde mâchoire de serrage (40), dans lequel une pièce (33) peut être serrée entre la première mâchoire de serrage (38) et la seconde mâchoire de serrage (40), un entraînement (54), un élément d'actionnement (52) qui est déplaçable par rapport à la base (36) et qui est couplé à la première mâchoire de serrage (38), dans lequel un mouvement de déplacement de l'élément d'actionnement (52) est provoqué par l'entraînement (54) et l'élément d'actionnement (52) provoque un déplacement de la première mâchoire de serrage (38), un transmetteur (90) qui est agencé sur l'élément d'actionnement (52) et est déplaçable avec l'élément d'actionnement (52) et est déplaçable par rapport à l'élément d'actionnement (52), une première butée (100) et une seconde butée (102) espacée pour le transmetteur (90), entre lesquelles le transmetteur (90) est déplaçable avec l'élément d'actionnement (52), dans lequel en cas de repos du transmetteur (90) contre la première butée (100) ou contre la seconde butée (102) le transmetteur (90) est déplaçable par rapport à l'élément d'actionnement (52), et un capteur (110) par lequel une ou plusieurs positions du transmetteur (90) peuvent être détectées.

2. Dispositif de serrage de pièce selon la revendication 1, **caractérisé en ce que** la première butée (100) et la seconde butée (102) sont agencées de manière fixe en translation par rapport à la base (36).

3. Dispositif de serrage de pièce selon la revendication 1 ou 2, **caractérisé en ce qu'**un sens d'écartement entre la première butée (100) et la seconde butée (102) est parallèle à un sens de déplacement (50) de l'élément d'actionnement (52).

4. Dispositif de serrage de pièce selon l'une des revendications précédentes, **caractérisé en ce que** la première butée (100) et la seconde butée (102) sont formées par des côtés intérieurs (104 ; 106) d'un boîtier (70) dans lequel une tête de capteur (112) du capteur (110) est agencée, et en particulier
**en ce que** le transmetteur (90) est positionné dans le boîtier (70).

5. Dispositif de serrage de pièce selon l'une des revendications précédentes, **caractérisé en ce que** le transmetteur (90) se loge sur l'élément d'actionnement (52), et en particulier
**en ce que** le transmetteur (90) présente un élément annulaire (92) ou est formé par un élément annulaire (92), dans lequel l'élément d'actionnement (52) est traversé par une ouverture annulaire (94).

6. Dispositif de serrage de pièce selon l'une des revendications précédentes, **caractérisé en ce que** le transmetteur (90) se loge à force sur l'élément d'actionnement (52), et en particulier
**en ce que** le transmetteur (90) présente un élément élastique (96) par lequel le transmetteur (90) se loge sur l'élément d'actionnement (52), et en particulier
**en ce que** l'élément élastique (96) est un joint torique.

7. Dispositif de serrage de pièce selon l'une des revendications précédentes, **caractérisé en ce que** le transmetteur (90) présente une ou plusieurs zones, par rapport auxquelles le capteur (110) est sensible.

8. Dispositif de serrage de pièce selon l'une des revendications précédentes, **caractérisé en ce que** le capteur (110) est un capteur de proximité ou capteur de distance ou commutateur de contact et/ou
**en ce que** le capteur (110) est un capteur sans contact et/ou
**en ce que** le capteur (110) est un capteur inductif.

9. Dispositif de serrage de pièce selon l'une des revendications précédentes, **caractérisé en ce que** le capteur (110) génère un signal de commutation lorsque le transmetteur (90) atteint la première butée (100), dans lequel la première butée (100) est plus éloignée de la première mâchoire de serrage (38) que la seconde butée (102).

10. Dispositif de serrage de pièce selon l'une des revendications précédentes, **caractérisé par** un dispositif de commande (116) qui est couplé de manière à pouvoir transmettre et recevoir des signaux au capteur (110) et qui commande l'entraînement (54), et en particulier
en ce que le dispositif de commande (116) arrête un mouvement d'éloignement de la première mâchoire de serrage (38) de la seconde mâchoire de serrage (40) lorsque le capteur (110) met à disposition un signal de commutation pour l'atteinte de la première butée (100) par le transmetteur (90), et en particulier en ce que le dispositif de commande (116) présente un dispositif de limitation de course de déplacement (118) qui délimite une largeur d'ouverture (d₁) entre la première mâchoire de serrage (38) et la seconde mâchoire de serrage (40), dans lequel une course de déplacement (d₂) est la largeur d'ouverture (d₁) moins une largeur de pièce (b), et en particulier en ce que la course de déplacement (d₂) est limitée à 6 mm au plus.

11. Dispositif de serrage de pièce selon l'une des revendications précédentes, **caractérisé en ce qu'**au moins une des grandeurs présentes est réglable de manière perceptible :
(i) position de la première butée (100) ;
(ii) position de la seconde butée (102) ;
(iii) distance entre la première butée (100) et la seconde butée (102).

12. Dispositif de serrage de pièce selon l'une des revendications précédentes, **caractérisé en ce que** la première butée (100) est plus éloignée de la première mâchoire de serrage (38) que la seconde butée (102), dans lequel lorsque la première mâchoire de serrage (38) est déplacée vers la seconde mâchoire de serrage (40), le transmetteur (90) est déplacé et entraîné tout d'abord en direction de la seconde butée (102) avec l'élément d'actionnement (52) jusqu'à ce qu'il repose contre la seconde butée (102) et ensuite le transmetteur (90) n'est pas davantage déplacé par rapport à la seconde butée (102), et lorsque la première mâchoire de serrage (38) est déplacée de la seconde mâchoire de serrage (40), le transmetteur (90) est déplacé et entraîné avec l'élément d'actionnement (52) en direction de la première butée (100) jusqu'à ce qu'il repose contre celle-ci et en cas de suite du mouvement de l'élément d'actionnement (52) n'est pas davantage déplacé.

13. Dispositif de serrage de pièce selon l'une des revendications précédentes, **caractérisé en ce que** l'entraînement (54) est un entraînement hydraulique, pneumatique ou motorisé et/ou
**en ce que** l'élément d'actionnement (52) fait partie d'une unité à piston (58) et en particulier est une tige de piston.

14. Dispositif de serrage de pièce selon l'une des revendications précédentes, **caractérisé en ce qu'**une position d'écartement entre la première mâchoire de serrage (38) et la seconde mâchoire de serrage (40) peut être décelée par l'entraînement (57).

15. Machine-outil, comprenant un bâti de machine (12), au moins un support de pièce (32) et au moins un support d'outil (14), dans laquelle l'au moins un support de pièce (32) est ou comporte un dispositif de serrage de pièce (34) selon l'une des revendications précédentes, et en particulier
en ce que la base (36) fait partie du bâti de machine (12) ou est agencée fixement sur celui-ci, et en particulier
**caractérisée par** une réalisation comme scie et en particulier scie à ruban, dans laquelle un outil est un outil de sciage et en particulier un ruban de scie (16).

16. Procédé de serrage d'une pièce sur un dispositif de serrage de pièce selon l'une des revendications 1 à 14, pour lequel la pièce (33) est serrée entre une première mâchoire de serrage (38) déplaçable et une seconde mâchoire de serrage (40), dans lequel la première mâchoire de serrage (38) est déplacée à l'aide d'un élément d'actionnement (52) et un transmetteur (90) est agencé sur l'élément d'actionnement (52), pour lequel une ou plusieurs positions déterminées sont détectées par un capteur (110), et pour lequel le transmetteur (90) est entraîné entre une première butée (100) et une seconde butée (102) par l'élément d'actionnement (52) et le transmetteur (90) est non déplaçable par rapport à une base (36) et est déplaçable par rapport à l'élément d'actionnement (52) en cas de repos contre la première butée (100) et en cas de repos contre la seconde butée (102).

17. Procédé selon la revendication 16, **caractérisé en ce que** lors de l'atteinte de la première butée (100) par le transmetteur (90), dans lequel la première butée (100) est plus éloignée de la première mâchoire de serrage (38) que la seconde butée (102), le capteur (110) génère un signal de commutation, et en particulier
**en ce qu'**un dispositif de commande (116) arrête en raison du signal de commutation du capteur (110) un autre écartement l'une de l'autre de la première mâchoire de serrage (38) de la seconde mâchoire de serrage (40) afin de limiter une course de déplacement (d₂).
